# EUROPEAN PATENT APPLICATION

(11) **EP 1 655 090 A1**
(43) Date of publication of application: **10.05.2006**
(21) Application number: 05105980.6
(22) Date of filing: 30.06.2005
(51) Int. Cl.: B23G 7/02, B21H 3/08

(54) **Rolling tap**

(30) Priority: 05.11.2004 IT BS20040133
(71) Applicant: MEC-LAN S.r.l., 25030 Zocco D'Erbusco (IT)
(72) Inventor: LANCINI, Franco, 25030, ADRO (Brescia) (IT)
(74) Representative: Crippa, Paolo Ernesto

(57) **Abstract**

A rolling tap (4) for making a thread, rotating around a threading axis (X), said tap (4) comprising a body (6) and at least one rolling tool (28) to make the thread. The rolling tool (28) is mounted rotationally with respect to the body (6), along a machining axis (Y) separate from the threading axis (X). The tap (4) requires reduced machining power to make the threads and suffers reduced wear and tear.

## Description

The present invention regards a threading tap. In particular, the present invention regards a rolling threading tap, which deforms the material with a permanent set.

Usually, rolling threading taps, known as rolling taps, comprise a body elongated along a main extension axis with a lobed section perpendicular to said axis.

The taps currently available are used to thread relatively ductile materials and small diameter holes, given that they deform the material rather than cut it and therefore require high levels of power. For larger diameter holes or for materials lacking in ductility, the currently available taps tend to jam inside the piece or break due to torsion. Furthermore, said currently available taps wear quickly, meaning that the tool life is relatively short.

The purpose of the present invention is to make a rolling tap available to solve the problems mentioned with regard to the current technique.

This purpose is satisfied by a rolling tap as described in claim 1.

Further features and the advantages of the rolling tap according to the present invention will be described herein, in a non-restrictive example of construction of said tap, in which:

figure 1 represents a lateral view of a rolling tap according to an embodiment of the present invention;

figure 2 represents a prospective view of the rolling tap shown in figure 1;

figure 3 represents a section view of the rolling tap shown in figure 1, along the III-III section plane of figure 1;

figure 4 represents a section view of the rolling tap shown in figure 1, along the IV-IV section plane of figure 1;

figure 5 represents a lateral view of the rolling tap shown in figure 1, from the side of arrow V of figure 1;

figure 6 represents a section view of a part of the rolling tap shown in figure 1;

figure 7 represents a lateral view of an enlarged part of the rolling tap shown in figure 1.

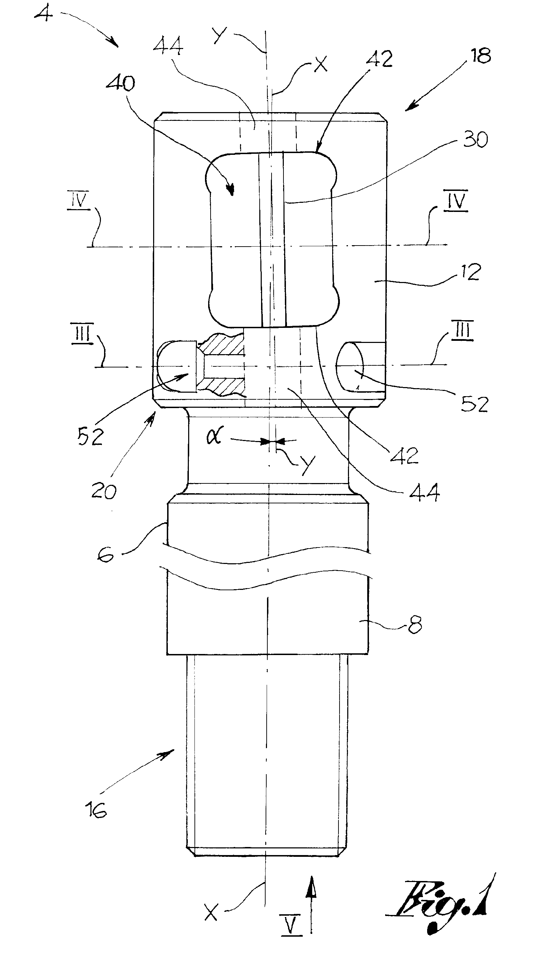

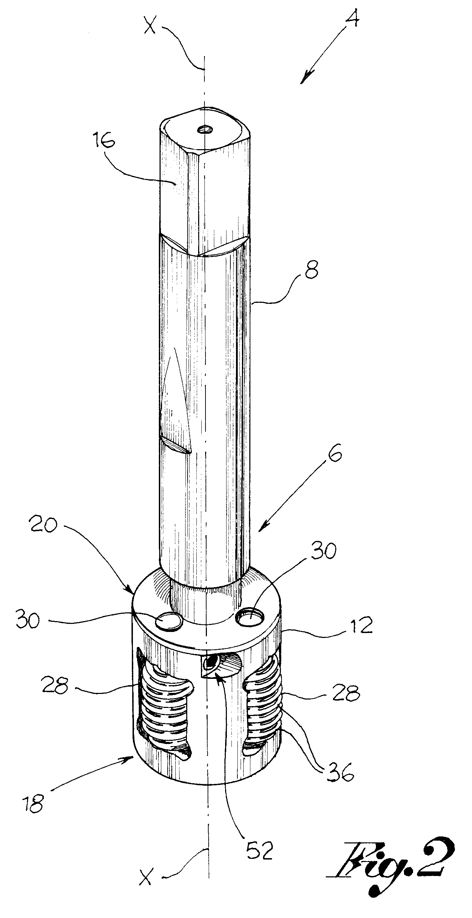

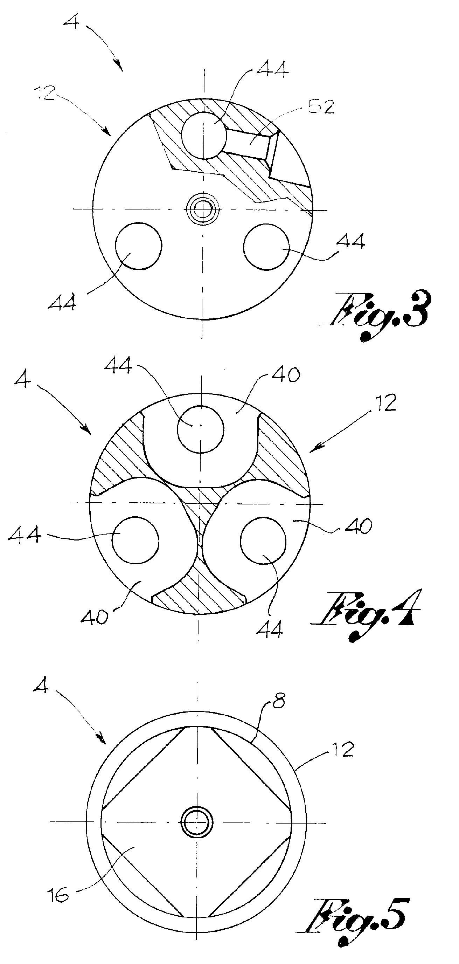

The elements or parts of elements in common between the forms of construction described herein will be indicated with the same numeric references.

With reference to the figures attached, number 4 is used to indicate a rolling tap, specially suited to threading a hole.

Said rolling tap has a generally cylindrical shape and extends along a threading axis X, which is the symmetrical axis for the corresponding thread created using the same tap.

The rolling tap 4 comprises a body 6 with a stem 8 and a machining head 12, preferably coaxial to the threading axis X.

The stem 8 enables the connection of the rolling tap to a driving device, such as the spindle of a machine tool, to rotate the tap with respect to the threading axis X.

The stem 8, preferably fitted to the opposite end to the machining head 12, comprises a connection portion 16, with a square section for example, suitable for connection to the spindle of a machine tool, so as to transmit the rotary movement of the spindle to the rolling tap.

The machining head 12 has a generally cylindrical shape with a head diameter preferably larger than the diameter of the stem 8, measuring the diameters with respect to a section plane perpendicular to the threading axis X.

The machining head 12 extends from an attachment edge 18, directly facing the piece to be threaded with respect to the threading axis X, to an exit edge 20, axially opposed to the attachment edge 18, with respect to the threading axis X.

The rolling tap comprises, advantageously, at least one rolling tool 28, to perform the rolling action, principally to deform the piece to be threaded.

The rolling tool 28 is mounted rotationally with respect to the body 6, and particularly with respect to the machining head 12, along a machining axis Y, distinguished from said threading axis X. In particular, the rolling tool 28 comprises a cavity 29 which rotationally houses a principally cylindrical pin 30, directed along said machining axis Y and fastened to the machining head 12.

The pin 30 is preferably made of very hard material, such as Tungsten carbide, and has an anti-friction coating.

Advantageously, the machining axis Y is skew with respect to the threading axis X, i.e.: the machining axis Y and the threading axis X are not on the same plane, so they are neither incident nor parallel between them.

In particular, a projection of the machining axis Y on a plane parallel to the machining axis Y and passing through the threading axis X, forms a threading angle 'a' with the threading axis.

Said threading angle a is principally equal to the threading inclination angle that can be created by the rolling tap. The term inclination angle is used to describe the inclination angle of the helix along which the thread develops.

According to an embodiment, the rolling tool 28 comprises a cylindrical body 32 equipped with rolling rings 36; said rings being perpendicular to the machining axis Y, equal to and equidistant from each other, according to the same pitch, equal to the pitch of the corresponding thread.

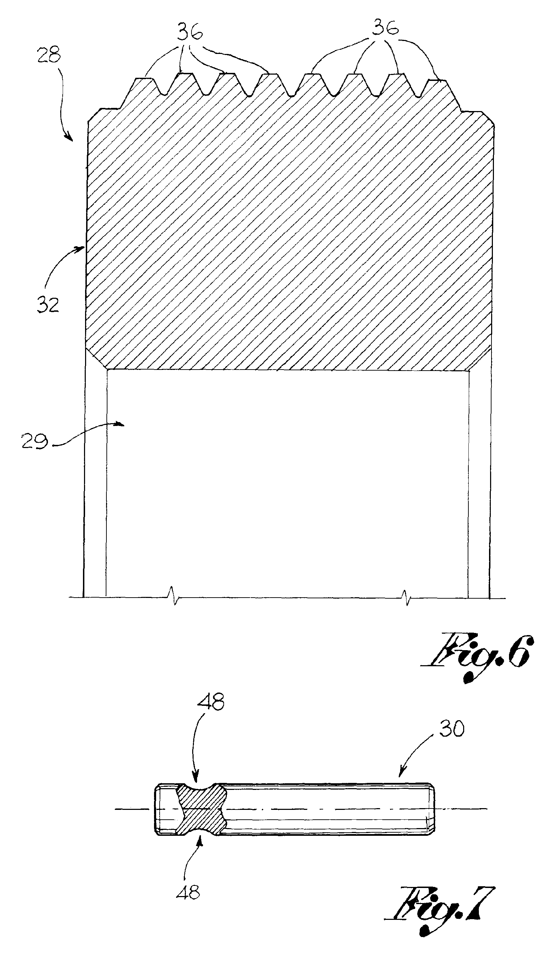

According to an embodiment, the rolling rings 36 have a principally trapezoid profile, as illustrated in figure 6 for example. Each rolling ring 36 makes a groove of the thread of the piece to be threaded; in other words, two consecutive rings create the ridge of a thread.

The pitch of the rolling rings 36 corresponds with the pitch of the thread made by the tap.

Each rolling tool 28 is advantageously mounted rotationally with respect to the tap on pin 30 directed along machining axis Y, and at least partially housed in the machining head 12 in a specific seat 40.

According to a form of construction, the seat 40 is preferably cylindrically shaped and has a radial depth, i.e.: a depth with respect to a plane perpendicular to the threading axis X, such as to have no contact with the same threading axis X. In other words, the radial depth of each seat 40 is less than the radius of the machining head 12 with respect to a plane perpendicular to the threading axis X.

The seat 40 has, for example, a principally cylindrical shape with flat bases 42 parallel to each other and perpendicular to the machining axis Y; the seat has a height equal to the distances between said parallel bases 42, said height being no less than the height of the pins 30.

Preferably, the seat 40 has a central plane perpendicular to the bases 42 so as to divide the seat 40 into two preferably symmetrical portions with respect to the same central plane. Said central plane passes through the machining axis Y and is also a central plane for the pins 30.

In correspondence with the seat 40, the machining head 12 has a circular hole 44 passing through the machining head 12 from the attachment edge 18 to the exit edge 20, said hole being symmetric with respect to the machining axis Y so as to house the pin 30.

Preferably, the pin 30, in correspondence with an end facing the exit edge 20, comprises at least one groove 48, with preferably two diametrically opposing grooves 48.

The machining head 12, preferably in correspondence with the exit edge 20, comprises at least one locking hole 52, directed perpendicularly along the threading axis X and the machining axis Y, passing through the head 12 until it intercepts the pin 30, in correspondence with said grooves 48.

Advantageously, the locking hole 52 is threaded on the inside to allow the tightening of a screw or a socket head screw so as to bring one end of the socket head screw lock into contact with one of said grooves 48.

After tightening the screw or the socket head screw, the pins 30 are locked into the respective holes 44 and are particularly locked in rotation with respect to the machining head 12.

According to a preferred embodiment, the rolling tap comprises three rolling tools 28, set at 120 degrees with respect to a plane perpendicular to the threading axis X.

Advantageously, each of said rolling tools 28 is inclined according to a machining axis Y so that a projection of said machining axis Y on a plane parallel to said machining axis Y and passing through the threading axis X, forms a same threading angle 'a' with said threading axis X.

Said machining axes Y of the three rolling tools are parallel to each other.

The rolling tools are preferably the same, with a pitch which is the same as the pitch of the corresponding thread.

The rolling tools 28 are also axially set at a distance of 1/3 of the pitch of the corresponding thread; in other words, the corresponding rolling rings 36 of two adjacent rolling tools 28 are set at a distance of one third of the pitch of the corresponding thread, said distance being measured along the machining axis Y and perpendicular to said rolling rings.

For example, it is possible to construct this configuration using rolling elements which are the same, arranged with respect to the attachment edge of the machining head at distances which vary by a third of the pitch, said distances being measured parallel to the machining axes Y.

Preferably, the machining head comprises three cavities, principally equal and set at 120 degrees with respect to a plane perpendicular to the threading axis X.

Each of said cavities can house, at least partially, said rolling tools 28.

Preferably, the rolling tools 28 have an overall diameter greater than the radial depth of the seats 40 but less than the tangential depth of the cavities, where the tangential depth is measured on a plane perpendicular to the machining axis Y, and perpendicular to the radial direction. The term overall diameter is used to describe the diameter of the rolling tools 28 measured perpendicularly to the machining axis Y and in correspondence with a rolling ring 36.

Following the introduction of the rolling tools 28 into their respective seats 40, at least a portion of the tools, corresponding preferably to the rolling rings 36, protrudes radially towards the outside of the machining head 12, so as to influence the lateral surface of the piece to be threaded.

In general, in an embodiment of a rolling tap comprising 'n' rolling tools, the 'n' rolling elements are set at 360/n degrees with respect to a plane perpendicular to the threading axis X, each of said rolling elements being inclined along a machining axis Y so that a projection of said machining axis Y on a plane parallel to said machining axis Y and passing through the threading axis X, forms a same threading angle 'a' with said threading axis X. Advantageously, the 'n' rolling elements are the same and are axially set, with respect to the machining axis Y, at a distance of 1/n of the pitch of the corresponding thread.

The 'n' machining axes are advantageously parallel.

For example, for rather large diameter holes, rolling taps with 4,6 or 8 tools can be advantageously used, positioned at 360/4, 360/6 and 360/8 degrees with respect to a plane perpendicular to the threading axis X. Advantageously the 4, 6 or 8 rolling elements are the same and are axially set, with respect to the machining axis Y, at a distance of 1/4, 1/6 and 1/8 respectively of the pitch of the corresponding thread.

According to a further embodiment of the present invention, the rolling tools 28, besides being inclined by a threading angle 'a' as described earlier, are also inclined with respect to a radial direction according to a conical angle; in other words, along the extension of the rolling tool, the distance between the machining axis Y and the threading axis X varies, preferably increasing as the machining head moves from the attachment edge towards the exit edge. The distance between the machining axis Y and the threading axis X is also considered with respect to a plane perpendicular to the threading axis X.

In this way the machining head can use the rolling process to create a conical threaded hole with the conical shape of the hole equal to the sum of the conical angles.

The term conical angle is used to describe the angle formed by two diametrically opposing hole generators with respect to the threading axis X.

The operating process of the rolling tap invented will now be described.

In particular, the rolling tap is connected to a driving device, such as the spindle of a machine tool, using the connection portion.

The machining head is then positioned in correspondence with the hole to be threaded, aligning the axis of the hole to be threaded with the threading axis X of the tap. The tap is made to rotate in a first rotational direction and the rotating head is inserted axially in the hole to be threaded, until the required length thread is reached.

When it comes into contact with the material of the piece to be threaded, the tool, made to rotate around the threading axis X, is rotated around its own machining axis Y in a second rotational direction, opposite to the first rotational direction, so that the point of contact between the tool and the material to be threaded rolls purely with respect to the point of contact with the material.

This pure rolling motion creates static friction between the tool and the material, so there is no drag between the tool and the piece, i.e.: dynamic friction.

Lastly, the rolling tap is extracted from the hole, making it rotate inversely with respect to the machining rotation direction.

Preferably, during the tapping operation both the tap and the hole to be threaded are lubricated and cooled using lubricant-coolant, injecting the fluid using a special nozzle in correspondence with the spindle of the machine tool.

As can be understood from the description, the rolling tap according to the invention makes it possible to overcome the problems related to the rolling taps currently available.

The absence of shavings avoids the formation of scrap material and reduces costs.

There being no cutting action, the piece's resistance to fatigue is improved, as the fibres of the piece flow continuously, without interruption.

Furthermore, processes carried out using machine tools are particularly quick, for high production levels. In particular, it has been noted that rolling speeds up to three times those obtainable using traditional rolling taps can be achieved.

The surface finishes obtained are extremely good and require no additional machining, further reducing the time it takes to tap the holes.

Unusually, the rolling tap according to the present invention requires reduced cutting power compared with the rolling taps currently available, with consequent energy savings and reduced production times. In particular, the machining power required is approximately one third of the power normally required by the rolling taps currently available.

Therefore, the rolling tap according to the invention can also be used on materials lacking in ductility and on holes with rather large diameters.

Furthermore, the rolling tap according to the invention suffers less wear and tear than those currently available, guaranteeing major productivity.

In the rolling taps currently available, relative drag takes place between the rolling tool and the piece to be threaded, increasing the wear and tear of the tool and generating large amounts of warmth due to friction. While in the rolling tap according to the present invention, a substantially pure rolling motion takes place between the tool and the piece.

According to a further advantage, the rolling tap according to the invention allows the replacement of even just one rolling tool, thus avoiding the need to replace the whole tap in the case of localised wear and tear, e.g.: on a single rolling ring of a tool.

In this way, the body of the tool, comprising the stem and the machining head, can be reused for a long time, with further savings on machining costs.

It is also possible to assemble the same rolling tools on different taps with different diameter heads; in this way the same rolling tools can be used to make threads with the same pitch but different diameters.

Obviously a technician in the sector, needing to satisfy contingent, specific needs, can make numerous changes and alterations to the rolling taps described above, all of which within the context of the invention as described in the following claims.

## Claims

1. Rolling tap (4) for making a thread, rotating around a threading axis (X), said tap (4) comprising a body (6) for connection to a driving device and at least one rolling tool (28) to make said thread,
in which
said rolling tool (28) is mounted rotationally with respect to the body (6), along a machining axis (Y) separate from said threading axis (X).

2. Rolling tap (4) according to claim 1, in which said machining axis (Y) is skew with respect to the threading axis (X).

3. Rolling tap (4) according to claims 1 or 2, in which a projection of said machining axis (Y) on a plane parallel to said machining axis (Y) and passing through the threading axis (X), forms a threading angle (a) with said threading axis (X).

4. Rolling tap (4) according to any of the previous claims, in which said at least one rolling tool (28) is a cylindrical body (32) comprising rolling rings (36) around the perimeter of the cylindrical body (32), said rolling rings (36) being perpendicular to said machining axis (Y) and equidistant from each other.

5. Rolling tap (4) according to any of the previous claims, comprising three rolling tools (28).

6. Rolling tap (4) according to claim 5, in which said rolling tools (28) are set at 120 degrees with respect to a plane perpendicular to said threading axis (X).

7. Rolling tap (4) according to claims 5 or 6, in which each of said rolling tools (28) is inclined according to a machining axis (Y) so that a projection of said machining axis (Y) on a plane parallel to said machining axis (Y) and passing through the threading axis (X), forms a same threading angle (a) with said threading axis (X).

8. Rolling tap (4) according to claims 5,6 or 7, in which said rolling tools (28) are the same, with a pitch equal to the pitch of the corresponding thread.

9. Rolling tap (4) according to any of the previous claims from 5 to 8, in which the rolling rings (36) of two adjacent rolling tools (28) are set at a distance of a third of the pitch of the corresponding thread.

10. Rolling tap (4) according to any of claims 5 to 9, in which the machining axes (Y) of the rolling tools (28) are parallel to each other.

11. Rolling tap (4) according to any of the previous claims, comprising 'n' rolling tools (28) set at 360/n degrees with respect to a plane perpendicular to the threading axis, each of said rolling elements (28) being inclined along a machining axis (Y) so that a projection of said machining axis (Y) on a plane parallel to said machining axis (Y) and passing through the threading axis (X), forms a same threading angle (a) with said threading axis (X).

12. Rolling tap (4) according to claim 11, in which said 'n' rolling tools (28) are all the same.

13. Rolling tap (4) according to claims 11 or 12, in which said 'n' rolling tools (28) are provided for in numbers of 4, 6 or 8.

14. Rolling tap (4) according to claims 11, 12 or 13, in which the rolling rings (36) of two adjacent rolling tools (28) are set at a distance of 1/n of the pitch of the corresponding thread.

15. Rolling tap (4) according to any of claims 11 to 14, in which the machining axes (Y) of the 'n' rolling tools (28) are parallel to each other.

16. Rolling tap (4) according to any of the previous claims, in which the rolling tools (28) are inclined with respect to a radial direction according to a conical angle, so that the distance between the machining axis (Y) and the threading axis (X) varies along the rolling tools (28).

17. Rolling tap (4) according to claim 16, in which said distance between the machining axis (Y) and the threading axis (X) increases as the machining head (12) moves from an attachment edge (18) towards an exit edge (20).

18. Rolling tap (4) according to any of the previous claims, in which said rolling tools (28) are mounted rotationally onto pins (30) and housed, at least partially, in the seats (40) of said body (6).

19. Rolling tap (4) according to claim 18, in which said pins (30) protrude at least partially from said seats (40) so that they engage with the machining head (12) of the body (6).

20. Rolling tap (4) according to claim 19, in which said pins (30) comprise, in correspondence with a stretch engaged with the machining head (12) of the body (6), at least one groove (48) for receiving a fastening element, so as to be forced to rotate with respect to the machining axis (Y).

21. Rolling tap (4) according to claim 20, wherein said pins (30) comprise two diametrically opposing grooves (48), suitable for receiving said fastening elements.

22. Rolling method using a rolling tap (4) according to any of the previous claims, comprising the phases of:
making the rolling tap (4) rotate around the threading axis (X) according to a first rotational direction,
bringing at least one rolling tool (28) of the rolling tap (4) into contact with the piece to be threaded, so that said rolling tool (28) is made to rotate around its own machining axis (Y) with a second rotational direction opposite to said first rotational direction.
